# EUROPEAN PATENT SPECIFICATION

(11) **EP 1 881 294 B1**
(45) Date of publication and mention of the grant of the patent: **10.09.2008**
(21) Application number: 06014964.8
(22) Date of filing: 18.07.2006
(51) Int. Cl.: G01C 21/32, G06F 17/30

(54) **Method for displaying an object on an electronic map and corresponding storage unit and navigation system**
Verfahren zur Anzeige eines Objekts auf einer elektronischen Karte, entsprechende Speichereinheit und Navigationssystem
Procédé d'affichage d'un objet sur une carte électronique, unité de stockage correspondante et système de navigation

(43) Date of publication of application: 23.01.2008
(73) Proprietor: Harman Becker Automotive Systems GmbH, 76307 Karlsbad (DE)
(72) Inventor: Meyer, Hendrik, 22527 Hamburg (DE)
(74) Representative: Bertsch, Florian Oliver

(56) References cited:
- WO-A-20/04099719
- US-A- 6 163 749
- US-B1- 6 674 445
- US-B1- 7 002 578
- US-B2- 6 606 558
- US-B2- 6 898 522

## Description

### Technical Field

The present invention generally relates to electronic maps, in particular to electronic maps displayed on an optical output unit of a navigation system onboard a vehicle. More particularly, the present invention relates to a method of displaying an object on an electronic map in a navigation system as well as a storage unit storing objects to be displayed on an electronic map displayed by a navigation system and a corresponding navigation system.

Navigation systems comprising optical output units, e.g., in the form of a monitor or other display unit, are nowadays widely known. Such optical output devices frequently serve to display a portion of a map in order to facilitate information transfer to a user, e.g., a driver of a vehicle, and the provision of driving directions to the user. In order to improve recognition quality, objects other than roads are frequently also displayed on the optical output unit. Traffic signs, e.g. direction signs and vegetation, e.g. trees, are exemplary for such objects that are displayed on electronic maps of navigation systems. An optical appearance or graphical representation of these objects is frequently stored in a so-called "style database", which stores the full graphical representations of the object to be displayed, e.g., in the form of any suitable graphic data format. This form of storing data related to various objects in the style database allows instances of the respective objects to be readily generated on the electronic map, without much additional processing by a processing unit being required.

US 6 163 749 discloses a navigation system with a map database, which has a list for icons to be displayed on the map. The icons correspond to small bitmap images.

However, this form of storage also has several disadvantages associated with it. For example, different end users frequently wish the same object to be displayed in various different designs. Since many graphical data formats cannot be easily modified so as to accommodate such different designs, this implies that, frequently, different style databases have to be provided for different end users. A further drawback of several known systems and methods for displaying an object on an electronic map is that if a new object type is introduced or an existing object type is modified, substantial modifications of the style database and/or of the software based on which the navigation system operates may be required, in order to appropriately adapt the system to displaying the new or modified object type.

Therefore, there exists a continued need in the art for improved methods and systems for displaying on an object an electronic map. In particular, there exists a need for a method and system for displaying an object on an electronic map, e.g. in a navigation device, into which new objects can be easily integrated and in which a single database may be used for different end users, while still allowing these different end users to easily integrate their individual design options.

### Brief Summary of the Invention

According to the present invention, this need is addressed by a method of displaying an object on an electronic map in a navigation system according to claim 1, a storage unit for a plurality of objects to be displayed on an electronic map according to claim 14, and a navigation system according to claim 18. The dependent claims define preferred or advantageous embodiments of the invention.

A method of displaying an object on an electronic map in a navigation system according to an aspect of the present invention comprises the step of providing a storage unit including a first storage portion and a second storage portion. The first storage portion includes type definition data for a plurality of object types, the type definition date defining a graphical representation of an object type in terms of at least one basic geometrical shape, and the second storage portion includes object data for a plurality of objects that are to be displayed, the object data for an object comprising object type data that specifies an object type of the object and object position data that specifies an object position of the object. The method further comprises the steps of retrieving object data including object type data and object position data of an object to be displayed from the second storage portion, retrieving type definition data of the object to be displayed from the first storage portion, wherein the correct type definition data is specified by the object type data of the object to be displayed, and generating a graphical representation of the at least one basic geometrical shape defined by the type definition data at a position on the electronic map defined by the object position data, in order to thus generate a graphical representation of the object to be displayed.

The construction of the storage unit that includes the first and second storage portions, which is central to the method, has various advantages associated with it. In particular, since type definition data defines the graphical representation of an object type in terms of one basic geometrical shape or of a plurality of basic geometrical shapes, it is sufficient for a device retrieving this data to be capable of displaying the basic geometrical shapes. By combining a larger number of such basic geometrical shapes, an arbitrarily complex geometrical structure may still be represented with sufficient and satisfactory accuracy. Further, new object types can be readily integrated into the method, since their graphical representation may also be defined in terms of the basic geometrical shapes. Still further, when a graphical representation or instance of the at least one basic geometrical shape is generated, the basic geometrical shape may be easily modified, e.g., changed in size and/or orientation, stretched in one or several directions, provided with a surface texture, provided with text to be inserted, or a relative size, relative position or relative orientation of various basic geometrical shapes corresponding to a single object type may be modified etc. Therefore, different design options of different end users can be easily accommodated. As will be explained in more detail below, the basic geometrical shapes may be arbitrary extended shapes, such as two- or three-dimensional geometrical shapes.

The type definition data of the object to be displayed, or, more generally, the type definition data of a plurality of different object types, may define a graphical representation of the object type in terms of a first and a second basic geometrical shape, and graphical representations of both of these basic geometrical shapes are generated for displaying the object. Further, the type definition data may comprise relative position data specifying a relative position of the first and second basic geometrical shapes, at least one of the graphical representations of the first and second basic geometrical shapes being generated at a position determined based on both the object position data and the relative position data. In other words, when the type definition data defines a graphical representation of the object type in terms of a plurality of basic geometrical shapes, e.g., the first of these basic geometrical shapes may be placed at the position determined by the object position, while the position of the other basic geometrical shapes is determined by adding the relative position to the object position. In another embodiment, a relative position is defined for each one of the basic geometrical shapes that specifies a relative position of the respective basic geometrical shape relative to an arbitrary fixed point of the object type, such as its center. In this case, the graphical representations of the individual basic geometrical shapes are generated at positions determined, for each of the basic geometrical shapes, based on the object position data and the relative position data. As already explained above, in a case in which a graphical representation of an object type is not simply defined by a single basic geometrical shape, but rather by a plurality of basic geometrical shapes, even object types having a complex graphical representation may be well approximated in terms of basic geometrical shapes.

It should be noted that, while some or all object types may be defined in terms of several basic geometrical shapes, the type definition data may also define one or several object types in terms of one basic geometrical shape, only. For example, the object type "street" may be described in terms of a line, in particular in terms of a straight line. As will be explained in more detail below, the graphical representation of an object having object type "street" may still be varied employing modification parameters for modifying the graphical representation of the lines representing streets.

The object data of the object to be displayed may further comprise at least one modification parameter for modifying an object type, in which case the graphical representation of the at least one basic geometrical shape that is defined by the type definition data is generated based on the modification parameter. The modification parameter or modification parameters may correspond to different quantities, such as a size, an orientation, a line width, a line color, or a surface texture of the basic geometrical shape. Accordingly, the graphical representation of the basic geometrical shape generated on the electronic map may be varied in various ways, e.g., in size, orientation, line width, line color or surface texture. If an object type is composed of several basic geometrical shapes, one or several modification parameters may be provided for specifying a relative position, a relative orientation and/or a relative size of the various basic geometrical shapes. By allowing the various basic geometrical shapes to be modified according to modification parameters, an even wider variety of different object types may be generated.

The type definition data may define a graphical representation of the object type in terms of the at least one basic geometrical shape and, in addition, a surface texture of at least one surface of the at least one basic geometrical shape. In this case, when a graphical representation of the at least one basic geometrical shape is generated, the at least one surface is filled with the corresponding surface texture. The surface texture may also be provided in the form of a traditional graphics data format, which may, e.g., correspond to a picture taken of a representative of the object type. In one embodiment, the basic geometrical shape is a cuboid and the type definition data define surface textures for side surfaces of the cuboid. For example, for the object type "tree", one or several pictures representing side and top views, respectively, of the tree may be stored and may be used to placard side surfaces of the cuboid.

The object data may comprise at least one alphanumerical string that may be inserted into the instance of the at least one basic geometrical shape generated on the electronic map. For example, the object to be displayed may be a traffic sign, and the alphanumerical string may represent text to be displayed on the traffic sign. In this case, the basic geometrical shape or the basic geometrical shapes that constitute the graphical representation of the object to be displayed form a generic traffic sign, into which the alphanumerical string is inserted. In one embodiment, the alphanumerical string may further also be output via a voice output. The alphanumerical string may be output via the voice output when a current vehicle position approaches the object position of the corresponding object. Such a voice output is yet a further way of providing information to a vehicle driver, which may be readily combined with the method of displaying an object according to the various aspects and embodiments of the present invention. In particular, since text to be displayed on, e.g., a traffic sign is stored in the form of an alphanumerical string that is later to be inserted into, e.g., a graphical representation of a generic traffic sign, this alphanumerical string may also be harnessed for other purposes, such as a voice output. Prior to outputting the alphanumerical string via the voice output, it may be processed in any suitable way. For example, if the vehicle is traveling abroad, words or phrases represented by the alphanumerical string may be translated prior to being output via the voice output. More generally, if the object data comprise an alphanumerical string, this alphanumerical string may be harnessed for purposes other than displaying the object. Further, the alphanumerical string may also be further processed prior to being inserted into the graphical representation of the basic geometrical shapes, e.g., by translating the words, by converting numbers representing a distance from kilometers to miles etc.

As already indicated above, the basic geometrical shape or the basic geometrical shapes may be any suitable extended geometrical shapes. In particular, the basic geometrical shapes may be selected from a group comprising a line, a triangle, a rectangle, an octagon, and an ellipse. The group may further comprise arbitrary polygons. The basic geometrical shapes may also be selected from a group comprising a cuboid, a sphere, a pyramid, a cylinder, and a cone. In this way, a wide variety of two-dimensional and three-dimensional graphical objects may be displayed.

According to another aspect of the present invention, a storage unit storing a plurality of objects to be displayed on an electronic map in a navigation system is provided, which comprises a first storage portion that includes type definition data for a plurality of object types, the type definition data defining a graphical representation of an object type in terms of at least one basic geometrical shape, and a second storage portion that includes object data for a plurality of objects, the object data for an object comprising object type data specifying an object type of the object and object position data specifying an object position of the object. This storage unit may be advantageously employed in performing the method described above. In particular, the type definition data stored in the first storage portion and the object data stored in the second storage portion may be combined to generate a graphical representation of an object to be displayed. The basic graphical shapes that are used to define an object type in the first storage portion are again selected from a limited number of basic geometrical shapes, e.g. from a group comprising a line, a triangle, a rectangle, an octagon, and an ellipse and/or a group comprising a cuboid, a sphere, a pyramid, a cylinder, and a cone.

Since a graphical representation of an object type may again be composed not only of a single basic geometrical shape, but also of a plurality of basic geometrical shapes, the type definition data may correspondingly define a graphical representation of an object type in terms of a first and a second basic geometrical shape, as well as a relative position of the first and second basic geometrical shapes. By intercombining several basic geometrical shapes to form a graphical representation of an object type, even complex object types may be approximated with sufficient accuracy.

However, as already indicated above, the graphical representation of a given object type does not necessarily have to be defined in terms of a plurality of basic geometrical shapes, but may also be defined in terms of a single basic geometrical shape, only.

The object data for an object may, again, further include at least one modification parameter for modifying an object type. The modification parameter may, e.g., correspond to a size, an orientation, a line width, a line color, and/or a surface texture of the at least one basic geometrical shape of the corresponding object type. Therefore, in use of the storage unit, the graphical representation of the basic geometrical shape may be modified according to the modification parameter. The object data may further comprise one or several alphanumerical strings to be inserted into graphical representations of the basic geometrical shapes and/or a surface texture for at least one surface of the at least one basic geometrical shape.

According to another aspect of the present invention, a navigation system is provided which comprises an optical output unit, a processing unit, and the storage unit according to any one aspect or embodiment of the present invention. The processing unit is coupled to the storage unit to retrieve object data including object type data and object position data of an object to be displayed from the second storage portion, and to retrieve type definition data of the object to be displayed from the first storage portion, wherein the correct type definition data is selected based on the object type data of the object to be displayed. The processing unit controls the optical output unit in such a manner that a graphical representation of the object to be displayed is generated by generating a graphical representation of the at least one basic geometrical shape defined by the type definition data. The graphical representation is generated at a position on the optical output unit that is defined by or determined based on the object position data. A navigation system configured in such a manner is adapted to perform the method for displaying an object according to the various embodiments described above. Therefore, reference is made to the above as regards the advantages associated with this navigation system.

Preferably, for each object type, the at least one basic geometrical shape of the type definition data is selected from a set of basic geometrical shapes, and the processing unit is adapted to control the optical output unit so that a graphical representation of each basic geometrical shape of the set of basic geometrical shapes can be generated.

If the storage unit is such that the type definition data define a graphical representation of an object type in terms of a plurality of geometrical shapes, the processing unit controls the optical output unit in such a way that geometrical representations of the plurality of basic geometrical shapes are generated. In this way, a graphical representation of an object having a given object type is generated from graphical representations of the underlying basic geometrical shapes. If the storage unit is such that it comprises at least one modification parameter for modifying an object type, the processing unit controls the optical output unit in such a manner that graphical representations of the at least one basic geometrical shape are modified based on the modification parameter. If the storage unit is such that the type definition data define a graphical representation of the object type in terms of the at least one basic geometrical shape as well as a surface texture for at least one surface of the at least one basic geometrical shape, the processing unit controls the optical output unit in such a manner that a graphical representation of the at least one basic geometrical shape is generated and the at least one surface of the at least one basic geometrical shape is filled with the surface texture.

The storage unit may further be such that the object data of the object to be displayed further comprises an alphanumerical string. In this case, the processing unit may control the optical output unit in such a manner that the alphanumerical string is inserted into the graphical representation of the at least one basic geometrical shape. In particular, the object to be displayed may be a traffic sign, and the alphanumerical string may represent text to be displayed on the traffic sign. The navigation system may further comprise a voice output unit, the alphanumerical string further being output via the voice output unit. The navigation system may still further comprise position determining means that may include a GPS-receiver, for determining a current vehicle position, the alphanumerical string being output via the voice output unit when the current vehicle position approaches the object position of the object. As already explained above, the voice output unit provides a further means for communicating information to a driver of a vehicle.

The navigation system may further be designed in such a way that it is adapted to perform the method for displaying an object on an electronic map according to any one aspect or embodiment described above.

The method, storage unit and navigation system according to the present invention allow objects to be displayed on an electronic map in such a manner that new object types can be easily implemented and that the style in which a specific object type is displayed can be easily adapted to specific end user preferences.

It is anticipated that the main field of application of the present invention will be electronic maps and devices displaying the same, in particular navigation systems.

### Brief description of the drawings

Additional features and advantages of the present invention will become more readily appreciated from the following detailed description of preferred or advantageous embodiments with reference to the accompanying drawings.

Fig. 1 shows a schematic block diagram of a navigation system according to an embodiment of the present invention.

Fig. 2 shows a schematic illustration of a first storage portion of a storage unit of the embodiment shown in Fig. 1.

Fig. 3 shows a schematic illustration of a second storage portion of the storage unit of the embodiment of Fig. 1.

Fig. 4 shows a schematic illustration of a second storage portion according to another embodiment of the present invention.

Fig. 5 shows a flowchart representing a method of displaying an object on an electronic map according to an embodiment of the present invention.

Fig. 6 shows a flowchart representing a subroutine of the method show in Fig. 5.

### Description of preferred embodiments

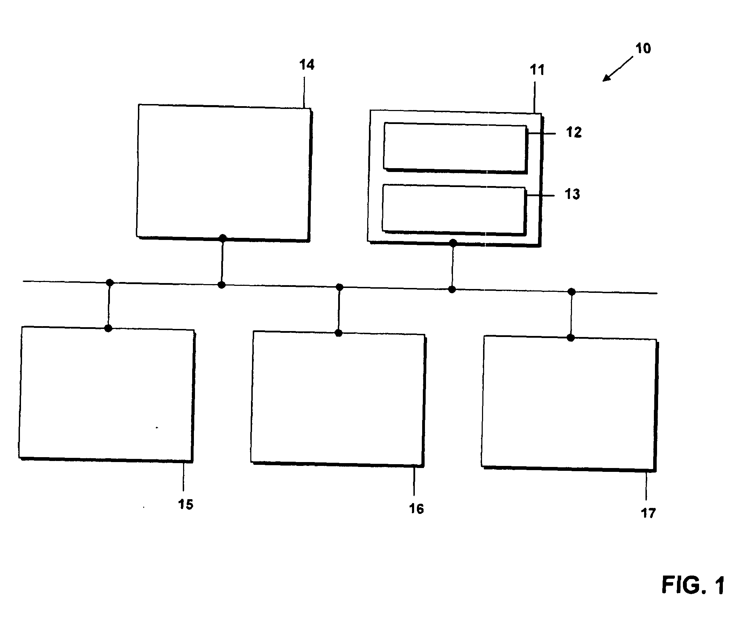

First, with reference to Fig. 1, a navigation system 10 according to an embodiment of the present invention will be explained. The navigation system 10 is designed to perform the method of displaying an object according to an embodiment of the present invention.

The navigation system 10 comprises a storage unit 11 including a first storage portion 12 and a second storage portion 13 to be explained in more detail below, a processing unit 14, an optical output unit 15, a voice output unit 16, and a position determining means 17. The optical output unit 15 may be any known optical output unit, e.g., a monitor or other display unit, a projection device, etc. Similarly, the position determining means 17 may be any known position determining means and may include, e.g., a GPS-receiver or gyroscopic devices.

The storage unit 11, which may be, e.g. a CD-ROM, a DVD, a memory card, or a hard disc of a navigation system, has stored thereon type definition data for a plurality of different object types in the first storage portion 12 and object data for a plurality of objects to be displayed in the second storage portion 13. While both the type definition data stored in the first storage portion 12 and the object data stored in the second storage portion 13 will be more fully explained below, it should be noted at this point that the type definition data, generally speaking, provide a description for the graphical representation of an object type in terms of one or several basic geometrical shapes. The basic geometrical shapes or "graphical primitives" are typically selected from a small number of elements that are chosen to meet the following requirements. Firstly, the processing unit 14 should be able to easily generate a graphical representation of the respective basic geometrical shape that is displayed by the optical output unit 15. This requirement is readily met by a wide variety of regular geometrical shapes, such as triangles, rectangles, circles, or ellipses, since the generation of a pixelized graphical representation of these elements only requires little computational power. Secondly, the set of shapes from which the basic geometrical shapes are selected should be chosen in such a way that a wide variety of different object types having different graphical representations may be well approximated by intercombining or superimposing different basic geometrical shapes. For example, the graphical representation of many trees is well approximated by a combination of a cylinder and a sphere or a cylinder and a cone, respectively, so that if three-dimensional vegetation objects are to be displayed, the basic geometrical shapes are preferably selected from a set that includes a cylinder, a sphere and/or a cone.

Since the first storage portion 12 defines a graphical representation of an object type in terms of one basic geometrical shape or a plurality of basic geometrical shapes, and since the processing unit 14 is operative to evaluate this definition and to generate a graphical representation of an object type by generating graphical representations of the corresponding constituent basic geometrical shapes, the definition of object types in terms of basic geometrical shapes or graphical primitives as provided by the first storage portion 12 may be interpreted as an intermediate layer between the storage of data related to objects to be displayed and the generation of a graphical representation of these objects. Further, while it is sufficient that the processing unit 14 is configured in such a way that it may generate a graphical representation of the basic geometrical shapes on the optical output unit 15, arbitrarily complex graphical representations of object types may be generated by intercombining the graphical representations of the basic geometrical shapes according to the definitions provided by the first storage portion 12. In this regard, the operation of the navigation system 10 is comparable to metalanguages such as XML or HTML run by conventional computers, that also allow complex objects to be generated by combining a limited number of fundamental objects, albeit transferred to the field of electronic maps in navigation systems.

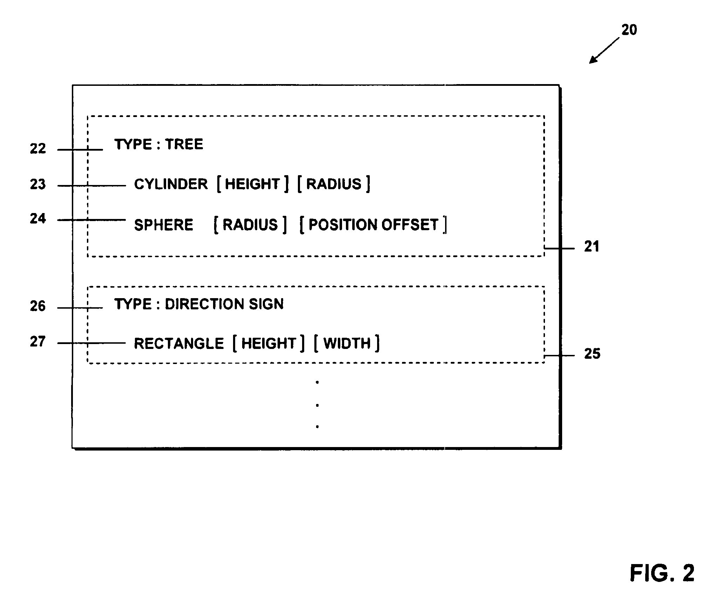

Next, with reference to Fig. 2, an exemplary first storage portion 20 will be explained. The illustrated first storage portion 20 is only exemplary, and may, e.g., be the first storage portion 12 of the embodiment shown in Fig. 1. The first storage portion 20 contains type definition data for a plurality of object types, in the exemplary case shown in Fig. 2, for the object type "tree" and the object type "direction sign", the corresponding type definition data being denoted by 21 and 25, respectively. Turning first to the type definition data 21 for the object type "tree", a type identifier 22 that specifies the object type is followed by a list of basic geometrical shapes, the graphical representation of which in combination reproduces the graphical representation of the object type. Each of the basic geometrical shapes 23 and 24 has associated with it several parameters or attributes that specify, e.g., the size of the constituent basic geometrical shapes, i.e., the height and radius of the cylinder and the radius of the sphere. Further, since the object type tree is composed of two basic geometrical shapes, the position offset between these shapes is an additional parameter that has to be specified. While it is possible to define the size parameters and the position offset of the different basic geometrical shapes in the type definition data 21, so that a combination of a cylinder and a sphere having the respective parameters represents a generic tree, in a preferred embodiment, these parameters may be superseded by parameters specified for individual objects having the object type tree. I.e., if a specific height and radius for the cylinder, radius for the sphere, and position offset between sphere and cylinder is specified for a specific object in the object data, these parameters supersede the generic parameters defined by the type definition data 21.

Similarly to the type definition data 21, the type definition data 25 for the object type "direction sign" comprises a type identifier 26 specifying the object type followed by a basic geometrical shape 27, in this case a rectangle, the graphical representation of which represents a graphical representation of the direction sign. The basic geometrical shape rectangle 27 again has parameters specifying the size of the rectangle associated with it. Again, these parameters may preferably be superseded by respective parameters specified for an individual object.

Naturally, the type definition data 21 and 25 schematically indicated in Fig. 2 is only exemplary, and other structures for type definition data may be employed as well. For example, both the object type tree and the object type direction sign could be represented by a cuboid, the surfaces of which are provided with an appropriate pattern or surface texture so as to allow a realistic graphical representation of a tree or a direction sign to be obtained by filling the surfaces of the cuboid with the corresponding surface texture. The surface texture may, e.g., be provided or stored in the form of conventional graphical data formats.

While only the basic geometrical shapes cylinder, sphere and rectangle have been employed in the type definition data shown schematically in Fig. 2, the basic geometrical shapes may more generally be selected from a larger group of basic geometrical shapes. For example, the basic geometrical shapes will typically be selected from a group of extended two- and three-dimensional shapes comprising, e.g., a line, a triangle, a rectangle, an octagon, an ellipse, a cuboid, a sphere, a pyramid, a cylinder and a cone. Other suitable choices for the set of basic geometrical shapes are also conceivable.

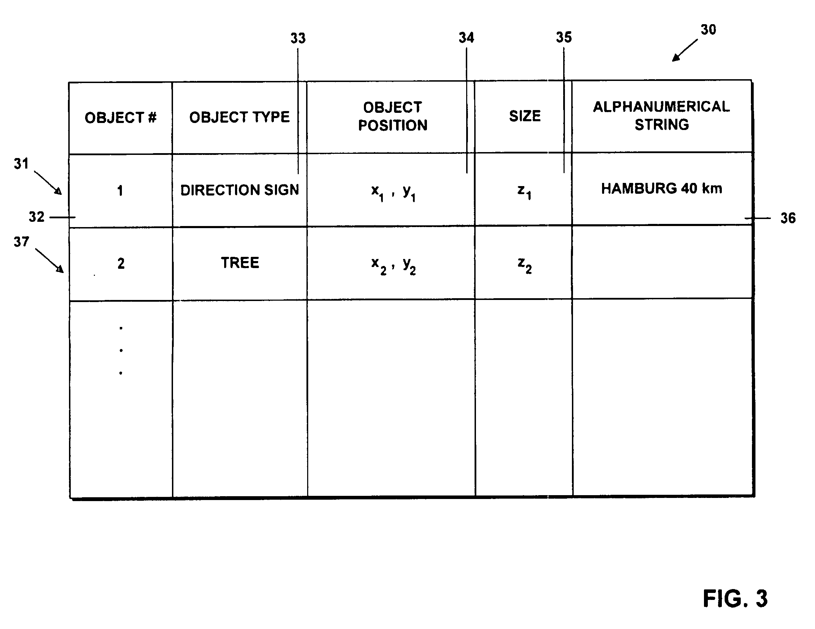

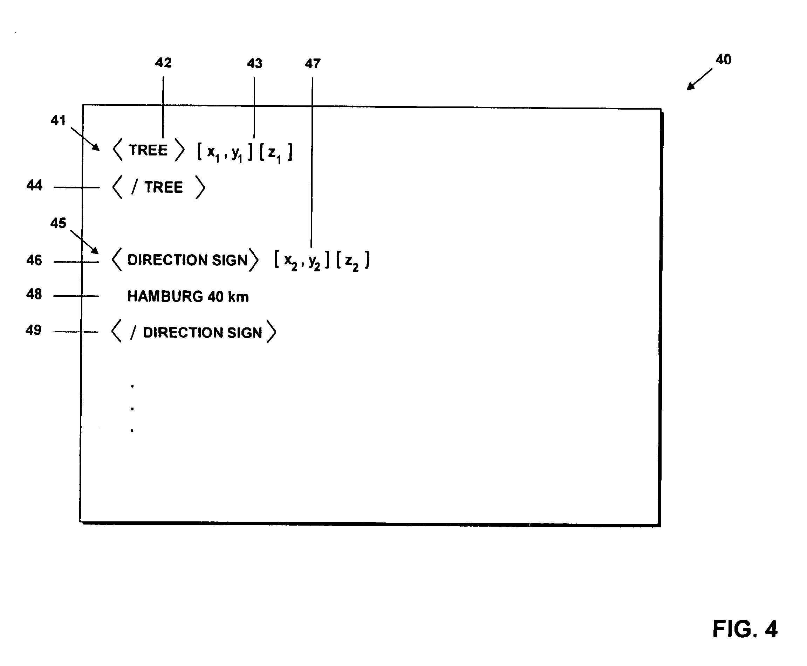

Next, with reference to Figs. 3 and 4, exemplary second storage portions 30 and 40, respectively, will be explained. The second storage portions 30 and 40 may be employed, e.g., as second storage portion 13 of the embodiment shown in Fig. 1. Contrary to the type definition data that define a graphical representation of an object having a given object type in terms of a number of basic geometrical shapes, thus providing instructions on how to generate a graphical representation of an object having a given object type, the object data 30, 40 contain information on the set of objects that are to be displayed on the electronic map. Since the description on how a graphical representation of a specific object type may be generated is contained in the type definition data stored in the first storage portion, it is sufficient to classify objects according to their object type in the object data 30 and 40 in Figs. 3 and 4, respectively.

As schematically indicated in Fig. 3, the object data 30 may be organized in the form of a table or data array. In the exemplary data array 30, two different objects 31 and 37 are listed. In the example shown, each object has an object identifier, e.g., in the form of a number 32. Typically, the object position provides a natural object identifier, so that no separate object identifier has to be provided. Further, for each object is specified at least its object type 33 and its position 34. The position may be specified, e.g., in the form of Cartesian coordinates. Further, in the example shown, the object data 31 and 37 comprise additional parameters that correspond to a size of the object 35 and an alphanumerical string 36 which, for the object having object type direction sign, is to be inserted into the direction sign.

While only an object size and an alphanumerical string inserted into the object are shown as examples for modification parameters in Fig. 3, the object data 31 and 37 may comprise a larger number of modification parameters. For example, assuming that the graphical representation of the object type tree is defined as a composition of a cylinder and a sphere, the object data for an object having object type tree may comprise a number of parameters that specify the radius and the height of the cylinder, the radius of the sphere, and the relative position of the sphere and the cylinder. By providing such modification parameters, the graphical representation of an object having a specific object type may be varied in a wide variety of ways, although the generic graphical representation of an object having the object type is fully specified by the respective type definition data. By varying the relative size and/or the relative position of the constituent basic geometrical shapes, i.e., the cylinder and the sphere in the case of the tree, the graphical representation of different tree species may be improved. In this way, the recognition quality of the electronic map is improved.

An alternative structure for object data 40 will next be explained with reference to Fig. 4. As already briefly indicated above, the displaying of objects on an electronic map according to the present invention is related to metalanguages, such as XML or HTLM. Therefore, the object data may also be provided in the form of a textual description 40 rather than the array structure shown in Fig. 3. Similarly to other metalanguages, in the object data 40, each object to be displayed is represented by a pair of tags, an opening tag and a closing tag, sandwiched between which are parameters. In this example, the object data 41 representing an object of the object type tree are in the form of a pair of tags 42, 44, the parameters 43 in between specifying the position and size of the tree. Similarly, for the object data 45 representing an object having object type direction sign, parameters 47 specifying the position and size of the direction sign are provided between the tags 46 and 49. The text 48 to be displayed on the direction sign is also provided in between the opening tag 46 and the closing tag 49.

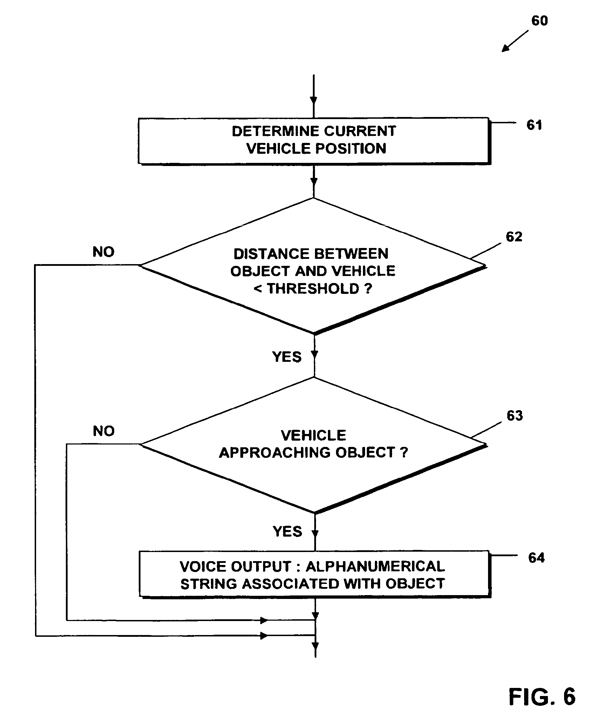

As should be evident from Fig. 4, in the present invention, the object data may be provided in the form of a simple textual description. One advantage of such a simple textual description is the large degree or flexibility. For example, objects having different object types may require different numbers and types of modification parameters. E.g., for the object type direction sign, a text to be displayed on the direction sign typically has to be provided. As should be evident even from the simple schematic representation of Fig. 4, such different numbers and types of parameters used to modify an object type can be easily accommodated with the textual description 40 of the object data. Yet another advantage of this textual description of the object data consists in the fact that object data provided in such a way may be easily harnessed also for purposes and functions different from generating graphical representations, as will be more fully appreciated from the description given below with reference to Fig. 6.

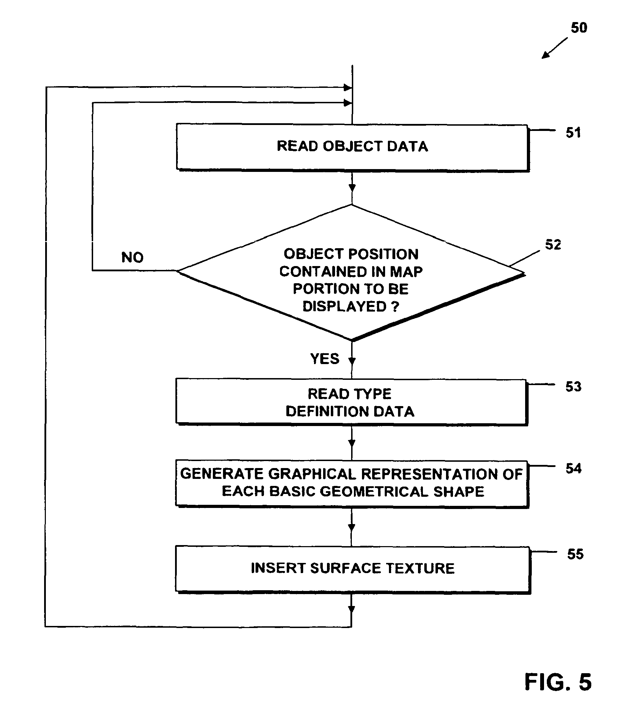

Next, with reference to Fig. 5, a method for displaying an object on an electronic map will be described that may be performed by the navigation system 10 of Fig. 1. The method is generally indicated at 50. First, at step 51, the processing unit 14 reads object data of an object from the second storage portion 13. Although not shown in Fig. 1, the processing unit 14 may comprise an internal working memory unit, or a working memory unit may be coupled to the processing unit 14 for storing object data read from the second storage portion 13. As explained with reference to Figs. 3 and 4 above, the object data for each object comprise, at least, object position data specifying an object position as well as object type data specifying the object type of the object. At step 52, the processing unit 14 determines whether the object position data of the object data read at step 51 correspond to a position located in the portion of the electronic map that is displayed on the optical output unit 16. If, at step 52, it is determined that the object is not to be displayed on the portion of the electronic map since, e.g., it is located outside of the relevant map portion, the object is discarded and new object data is read. If, however, it is determined that the object is to be displayed on the optical output unit 16, next, at step 53, the object type is determined from the object type data, and the type definition data corresponding to the thus determined object type is read. Since the type definition data defines a graphical representation of the object type in terms of one basic geometrical shape or a plurality of basic geometrical shapes, at step 54, the processing unit 14 controls the optical output unit 15 in such a manner that graphical representations or instances of each of the basic geometrical shapes determined by the corresponding type definition data are generated, i.e., are displayed by the optical output unit 15. The location at which the graphical representation of each basic geometrical shape is generated will typically be determined in dependence on both the object position specified by the object position data and relative positions of the different basic geometrical shapes constituting the object type. As explained with reference to Figs. 2-4 above, these relative positions of the various basic geometrical shapes constituting an object type may be specified by the type definition data or as a parameter comprised by the object data. Subsequently, at step 55, the surfaces of the basic geometrical shapes are filled with a surface texture, if provided. In simple embodiments, the surface texture may consist of a regular pattern supplemented by a specific color information. For example, for a tree composed of a cylinder and a sphere, the sphere may be provided with a surface texture imitating leaves and being colored in green. Steps 54 and 55 may be merged into a single step. Further, it is not necessary for step 55 to be performed. After step 55, the object data of another object to be displayed may be read in, i.e., steps 51-55 may be iterated.

While steps 51-55 are steps aiming at displaying an object on the optical output unit, i.e., at generating a graphical representation of the object thereon, by virtue of the way in which object data is stored in the second storage portion 13, the object data may be harnessed for purposes other than displaying objects after the object has been displayed. For example, if the object is a direction sign or other traffic sign, it may not only be displayed on the optical output unit, but the text written thereon may also be output by a voice output unit, e.g., after step 55 of Fig. 5.

With reference to Fig. 6, a subroutine 60 will be explained that may be used to implement such a voice output. First, at step 61, a current vehicle position is determined. In the navigation system shown in Fig. 1, this is achieved by the position determining means 17, e.g., in the form of a GPS receiver. Next, at step 62, it is determined whether the distance between the vehicle and an object that has an alphanumerical string or text associated with it is below a predetermined threshold. Alternatively, it may also be determined whether the distance between the object that has an alphanumerical string associated with it and the vehicle lies within a given interval. In order to ensure that no voice output is generated when the vehicle has already driven past the object, at step 63 it is determined whether the vehicle is approaching the object. Only if this is the case, a voice output is generated at step 64. For example, the alphanumerical string that is associated with the object, such as text written on a direction sign, is output via the voice output unit 16. The voice output provides yet another means of alerting a driver of a vehicle of objects that he is currently approaching.

It should be noted that one of the advantages of the embodiment described above is that, since both the type definition data and the object data are stored in the first and second storage portions 12, 13 of the storage unit 11 shown in Fig. 1, existing object types may be easily modified by modifying the corresponding type definition data stored in the first storage portion, or new object types may be added by correspondingly supplementing the first storage portion. As long as the new or modified object type still is defined in terms of the same basic geometrical shapes that are used to define all other object types, the processing unit 14 being adapted to generate a graphical representation of these basic geometrical shapes, it is not necessary to modify or update any parts other than the storage unit 11 of the navigation system shown in Fig. 1 in order to implement the new or modified object types. This results in an increased versatility and flexibility in updating databases for objects to be displayed on electronic maps. A further advantage of the embodiment discussed above is that, since the processing unit 14 only has to be capable of generating graphical representations of a limited number of basic geometrical shapes, the complexity of the instruction code according to which the processing unit 14 operates may be reduced.

Summarizingly, the methods and systems according to the present invention allow objects to be displayed on an electronic map, in particular in a navigation system, while providing increased flexibility. More specifically, in the methods and systems according to the present invention, existing object types may be easily modified and new object types may be easily introduced.

## Claims

1. A method of displaying an object on an electronic map in a navigation system, comprising:
- providing a storage unit (11) including a first storage portion (12) and a second storage portion (13),
wherein the first storage portion (12) includes type definition data (21, 25) for a plurality of object types, the type definition data (21, 25) defining a graphical representation of an object type in terms of at least one basic geometrical shape, and wherein the second storage portion (13) includes object data (31, 37; 41, 45) for a plurality of objects, the object data (31, 37; 41, 45) for an object comprising object type data specifying an object type of the object and object position data specifying an object position of the object,
- retrieving object data (31, 37; 41, 45) including object type data and object position data of an object to be displayed from said second storage portion (13),
- retrieving type definition data (21, 25) of said object to be displayed from said first storage portion (12), based on said object type data of said object to be displayed, and
- generating a graphical representation of said object to be displayed by generating a graphical representation of the at least one basic geometrical shape defined by said type definition data (21, 25) at a position on said electronic map determined based on said object position data.

2. The method according to claim 1,
**characterized in that**
said type definition data (21) of said object to be displayed defines a graphical representation of the object type in terms of a first basic geometrical shape and a second basic geometrical shape, wherein said step of generating a graphical representation comprises generating a graphical representation of said first basic geometrical shape and generating a graphical representation of said second basic geometrical shape.

3. The method according to claim 2,
**characterized in that**
said type definition data (21) further comprises relative position data specifying a relative position of said first basic geometrical shape and said second basic geometrical shape, and said graphical representation of said first basic geometrical shape and said graphical representation of said second basic geometrical shape are generated at positions determined based on said object position data and said relative position data.

4. The method according to any one of the preceding claims,
**characterized in that**
said object data (31, 37; 41, 45) of said object to be displayed further comprise at least one modification parameter (35) for modifying an object type, wherein said graphical representation of said at least one basic geometrical shape specified by said type definition data (21, 25) is generated based on said at least one modification parameter (35).

5. The method according to claim 4,
**characterized in that**
said at least one modification parameter (35) is selected from a group comprising a size, an orientation, a line width, a line color, and a surface texture of said at least one basic geometrical shape.

6. The method according to any one of the preceding claims,
**characterized in that**
said type definition data (21, 25) defines a graphical representation of said object type in terms of said at least one basic geometrical shape and a surface texture for at least one surface of said at least one basic geometrical shape, the method comprising the step of filling said at least one surface of said at least one basic geometrical shape with said surface texture.

7. The method according to claim 6,
**characterized in that**
said at least one basic geometrical shape is a cuboid and said type definition data define a surface texture for side surfaces of said cuboid.

8. The method according to any one of the preceding claims,
**characterized in that**
said object data (31; 45) of said object to be displayed further comprises at least one alphanumerical string (36; 48), and the method comprises the step of inserting said alphanumerical string (36; 48) into said graphical representation of said at least one basic geometrical shape.

9. The method according to claim 8,
**characterized in that**
said object to be displayed is a traffic sign and said alphanumerical string (36; 48) represents text to be displayed on said traffic sign.

10. The method according to claim 8 or claim 9,
**characterized by**
outputting said alphanumerical string (36; 48) via a voice output.

11. The method according to claim 10,
**characterized by**
determining a current vehicle position,
wherein said alphanumerical string (36; 48) is output via said voice output when said current vehicle position approaches the object position of said object to be displayed.

12. The method according to any one of the preceding claims,
**characterized in that**
said basic geometrical shape is selected from a group comprising a line, a triangle, a rectangle, an octagon, and an ellipse.

13. The method according to any one of the preceding claims,
**characterized in that**
said basic geometrical shape is selected from a group comprising a cuboid, a sphere, a pyramid, a cylinder, and a cone.

14. A storage unit storing a plurality of objects to be displayed on an electronic map in a navigation system, comprising
a first storage portion (12) which includes type definition data (21, 25) for a plurality of object types, the type definition data (21, 25) defining a graphical representation of an object type in terms of at least one basic geometrical shape, and
a second storage portion (13) which includes object data (31, 37; 41, 45) for a plurality of objects, the object data (31, 37; 41, 45) for an object comprising object type data specifying an object type of the object and object position data specifying an object position of the object.

15. The storage unit according to claim 14,
**characterized in that**
the type definition data (21) defines a graphical representation of an object type in terms of a first basic geometrical shape, a second basic geometrical shape, and a relative position of said first and second basic geometrical shapes.

16. The storage unit according to claim 14 or claim 15,
**characterized in that**
said object data (31, 37; 41, 45) for an object further includes at least one modification parameter (35) for modifying an object type, which modification parameter is selected from a group comprising a size, an orientation, a line width, a line color, and a surface texture of the at least one basic geometrical shape of the object type.

17. The storage unit according to any one of claims 14-16,
**characterized in that**
said type definition data defines a graphical representation of said object type in terms of said at least one basic geometrical shape and a surface texture for ant least one surface of said at least one basic geometrical shape.

18. A navigation system, comprising
an optical output unit (15),
a processing unit (14), and
the storage unit (11) according to any one of claims 14-17,
wherein said processing unit (14) is coupled to said storage unit (11) to retrieve object data (31, 37; 41, 45) including object type data and object position data of an object to be displayed from said second storage portion (13) and type definition data (21, 25) of said object to be displayed from said first storage portion (12), based on said object type data of the object to be displayed,
wherein said processing unit (14) controls said optical output unit (15) so that a graphical representation of the at least one basic geometrical shape defined by said type definition data (21, 25) is generated at a position on said optical output unit defined by said object position data.

19. The navigation system according to claim 18,
**characterised in that,**
for each object type, said at least one basic geometrical shape of the type definition data is selected from a set of basic geometrical shapes, and
said processing unit (14) is adapted to control said optical output unit (15) so that a graphical representation of each basic geometrical shape of said set of basic geometrical shapes can be generated on said optical output unit.

20. The navigation system according to claim 19,
**characterised in that**
said storage unit (11) is a storage unit according to claim 15, and said processing unit (14) controls said optical output unit (15) so that graphical representations of said first basic geometrical shape and said second basic geometrical shape are generated at positions on said optical output unit (15) determined based on said object position data and said relative position of said first and second basic geometrical shapes.

21. The navigation system according to claim 19 or claim 20,
**characterised in that**
said storage unit (11) is a storage unit according to claim 16, and
said processing unit (14) controls said optical output unit (15) so that said graphical representation of said at least one basic geometrical shape defined by said type definition data is modified based on said modification parameter (35).

22. The navigation system according to any one of claims 18-21,
**characterised in that**
said storage unit (11) is a storage unit according to claim 17, and
said processing unit (14) controls said optical output unit (15) so that a graphical representation of said at least one basic geometrical shape is generated and said at least one surface of said at least one basic geometrical shape is filled with said surface texture.

23. The navigation system according to any one of claims 18-22,
**characterised in that**
said object data (31; 45) of said object to be displayed further comprise an alphanumerical string (36; 48), and
said processing unit (14) controls said optical output unit (15) so that said alphanumerical string (36; 48) is inserted into said graphical representation of said at least one basic geometrical shape.

24. The navigation system according to claim 23,
**characterized in that**
said object to be displayed is a traffic sign and said alphanumerical string (36; 48) represents text to be displayed on said traffic sign.

25. The navigation system according to claim 23 or 24,
**characterized by**
a voice output unit (16), wherein said alphanumerical string (36; 48) is further output via said voice output unit (16).

26. The navigation system according to claim 25,
**characterized by**
position determining means (17) for determining a current vehicle position, wherein said alphanumerical string (36; 48) is output via said voice output unit (16) when said current vehicle position approaches the object position of said object to be displayed.

27. The navigation system according to any one of claims 18-26,
**characterized in that**
said navigation system performs the method according to any one of claims 1-13.

## Patentansprüche

1. Verfahren zum Anzeigen eines Objekts auf einer elektronischen Karte in einem Navigationssystem, umfassend
Bereitstellen einer Speichereinheit (11), die einen ersten Speicherabschnitt (12) und einen zweiten Speicherabschnitt (13) umfasst, wobei der erste Speicherabschnitt (12) Typdefinitionsdaten (21, 25) für eine Mehrzahl von Objekttypen umfasst, wobei die Typdefinitionsdaten (21, 25) eine graphische Darstellung eines Objekttyps in Bezug auf wenigstens eine geometrische Grundform definieren, und wobei der zweite Speicherabschnitt (13) Objektdaten (31, 37; 41, 45) für eine Mehrzahl von Objekten umfasst, wobei die Objektdaten (31, 37; 41, 45) für ein Objekt Objekttypdaten, die einen Objekttyp des Objekts angeben, und Objektpositionsdaten, die eine Objektposition des Objekts angeben, umfassen,
Abrufen von Objektdaten (31, 37; 41, 45), die Objekttypdaten und Objektpositionsdaten eines anzuzeigenden Objekts umfassen, von dem zweiten Speicherabschnitt (13),
Abrufen von Typdefinitionsdaten (21, 25) des anzuzeigenden Objekts von dem ersten Speicherabschnitt (12) basierend auf den Objekttypdaten des anzuzeigenden Objekts, und
Erzeugen einer graphischen Darstellung des anzuzeigenden Objekts, indem eine durch die Typdefinitionsdaten (21, 25) definierte graphische Darstellung der wenigstens einen geometrischen Grundform an einer Position auf der elektronischen Karte erzeugt wird, die basierend auf den Objektpositionsdaten bestimmt wird.

2. Verfahren nach Anspruch 1,
**dadurch gekennzeichnet, dass** die Typdefinitionsdaten (21) des anzuzeigenden Objekts eine graphische Darstellung des Objekttyps in Bezug auf eine erste geometrische Grundform und eine zweite geometrische Grundform definieren, wobei der Schritt des Erzeugens einer graphischen Darstellung ein Erzeugen einer graphischen Darstellung der ersten geometrischen Grundform und ein Erzeugen einer graphischen Darstellung der zweiten geometrischen Grundform umfasst.

3. Verfahren nach Anspruch 2,
**dadurch gekennzeichnet, dass** die Typdefinitionsdaten (21) weiterhin Relativpositionsdaten umfassen, die eine Relativposition der ersten geometrischen Grundform und der zweiten geometrischen Grundform angeben, und dass die graphische Darstellung der ersten geometrischen Grundform und die graphische Darstellung der zweiten geometrischen Grundform an Positionen erzeugt werden, die basierend auf den Objektpositionsdaten und den Relativpositionsdaten bestimmt werden.

4. Verfahren nach einem der vorhergehenden Ansprüche,
**dadurch gekennzeichnet, dass** die Objektdaten (31, 37; 41, 45) des anzuzeigenden Objekts weiterhin wenigstens einen Modifikationsparameter (35) zum Modifizieren eines Objekttyps umfassen, wobei die graphische Darstellung der durch die Typdefinitionsdaten (21, 25) angegebenen wenigstens einen geometrischen Grundform basierend auf dem wenigstens einen Modifikationsparameter (35) erzeugt wird.

5. Verfahren nach Anspruch 4,
**dadurch gekennzeichnet, dass** der wenigstens eine Modifikationsparameter (35) ausgewählt ist aus einer Gruppe, die eine Größe, eine Ausrichtung, eine Linienbreite, eine Linienfarbe und eine Oberflächentextur der wenigstens einen geometrischen Grundform umfasst.

6. Verfahren nach einem der vorhergehenden Ansprüche,
**dadurch gekennzeichnet, dass** die Typdefinitionsdaten (21, 25) eine graphische Darstellung des Objekttyps in Bezug auf die wenigstens eine geometrische Grundform und eine Oberflächentextur für wenigstens eine Oberfläche der wenigstens einen geometrischen Grundform definieren, wobei das Verfahren den Schritt eines Füllens der wenigstens einen Oberfläche der wenigstens einen geometrischen Grundform mit der Oberflächentextur umfasst.

7. Verfahren nach Anspruch 6,
**dadurch gekennzeichnet, dass** die wenigstens eine geometrische Grundform ein Quader ist, und dass die Typdefinitionsdaten eine Oberflächentextur für Seitenflächen des Quaders definieren.

8. Verfahren nach einem der vorhergehenden Ansprüche,
**dadurch gekennzeichnet, dass** die Objektdaten (31; 45) des anzuzeigenden Objekts weiterhin wenigstens eine alphanumerische Zeichenfolge (36; 48) umfassen, und dass das Verfahren den Schritt eines Einfügens der alphanumerischen Zeichenfolge (36; 48) in die graphische Darstellung der wenigstens einen geometrischen Grundform umfasst.

9. Verfahren nach Anspruch 8,
**dadurch gekennzeichnet, dass** das anzuzeigende Objekt ein Verkehrszeichen ist, und dass die alphanumerische Zeichenfolge (36; 48) auf dem Verkehrszeichen anzuzeigenden Text repräsentiert.

10. Verfahren nach Anspruch 8 oder 9,
**gekennzeichnet durch** ein Ausgeben der alphanumerischen Zeichenfolge (36; 48) über eine Sprachausgabe.

11. Verfahren nach Anspruch 10,
**gekennzeichnet durch** ein Bestimmen einer momentanen Fahrzeugposition, wobei die alphanumerische Zeichenfolge (36; 48) über die Sprachausgabe ausgegeben wird, wenn sich die momentane Fahrzeugposition der Objektposition des anzuzeigenden Objekts nähert.

12. Verfahren nach einem der vorhergehenden Ansprüche,
**dadurch gekennzeichnet, dass** die geometrische Grundform ausgewählt ist aus einer Gruppe, die eine Linie, ein Dreieck, ein Rechteck, ein Achteck und eine Ellipse umfasst.

13. Verfahren nach einem der vorhergehenden Ansprüche,
**dadurch gekennzeichnet, dass** die geometrische Grundform ausgewählt ist aus einer Gruppe, die einen Quader, eine Kugel, eine Pyramide, einen Zylinder und einen Kegel umfasst.

14. Speichereinheit, die eine Mehrzahl von auf einer elektronischen Karte in einem Navigationssystem anzuzeigenden Objekten speichert, umfassend
einen ersten Speicherabschnitt (12), der Typdefinitionsdaten (21, 25) für eine Mehrzahl von Objekttypen umfasst, wobei die Typdefinitionsdaten (21, 25) eine graphische Darstellung eines Objekttyps in Bezug auf wenigstens eine geometrische Grundform definieren, und
einen zweiten Speicherabschnitt (13), der Objektdaten (31, 37; 41, 45) für eine Mehrzahl von Objekten umfasst, wobei die Objektdaten (31, 37; 41, 45) für ein Objekt Objekttypdaten, die einen Objekttyp des Objekts angeben, und Objektpositionsdaten, die eine Objektposition des Objekts angeben, umfassen.

15. Speichereinheit nach Anspruch 14,
**dadurch gekennzeichnet, dass** die Typdefinitionsdaten (21) eine graphische Darstellung eines Objekttyps in Bezug auf eine erste geometrische Grundform , eine zweite geometrische Grundform und eine Relativposition der ersten geometrischen Grundform und der zweiten geometrischen Grundform definieren.

16. Speichereinheit nach Anspruch 14 oder 15,
**dadurch gekennzeichnet, dass** die Objektdaten (31, 37; 41, 45) für ein Objekt weiterhin wenigstens einen Modifikationsparameter (35) zum Modifizieren eines Objekttyps umfassen, wobei der Modifikationsparameter ausgewählt ist aus einer Gruppe, die eine Größe, eine Ausrichtung, eine Linienbreite, eine Linienfarbe und eine Oberflächentextur der wenigstens einen geometrischen Grundform des Objekttyps umfasst.

17. Speichereinheit nach einem der Ansprüche 14-16,
**dadurch gekennzeichnet, dass** die Typdefinitionsdaten eine graphische Darstellung des Objekttyps in Bezug auf die wenigstens eine geometrische Grundform und eine Oberflächentextur für wenigstens eine Oberfläche der wenigstens einen geometrischen Grundform definieren.

18. Navigationssystem, umfassend
eine optische Ausgabeeinheit (15),
eine Verarbeitungseinheit (14), und
die Speichereinheit (11) nach einem der Ansprüche 14-17,
wobei die Verarbeitungseinheit (14) mit der Speichereinheit (11) gekoppelt ist, um Objektdaten (31, 37; 41, 45), die Objekttypdaten und Objektpositionsdaten eines anzuzeigenden Objekts umfassen, von dem zweiten Speicherabschnitt (13) abzurufen, und um Typdefinitionsdaten (21, 25) des anzuzeigenden Objekts von dem ersten Speicherabschnitt (12) basierend auf den Objekttypdaten des anzuzeigenden Objekts abzurufen,
wobei die Verarbeitungseinheit (14) die optische Ausgabeeinheit (15) so steuert, dass eine durch die Typdefinitionsdaten (21, 25) definierte graphische Darstellung der wenigstens einen geometrischen Grundform an einer Position auf der optischen Ausgabeeinheit erzeugt wird, die durch die Objektpositionsdaten definiert wird.

19. Navigationssystem nach Anspruch 18,
**dadurch gekennzeichnet, dass** für jeden Objekttyp die wenigstens eine geometrische Grundform der Typdefinitionsdaten aus einer Gruppe von geometrischen Grundformen ausgewählt ist, und
dass die Verarbeitungseinheit (14) eingerichtet ist, um die optische Ausgabeeinheit (15) so zu steuern, dass eine graphische Darstellung jeder geometrischen Grundform der Gruppe von geometrischen Grundformen auf der optischen Ausgabeeinheit erzeugt werden kann.

20. Navigationssystem nach Anspruch 19,
**dadurch gekennzeichnet, dass** die Speichereinheit (11) eine Speichereinheit nach Anspruch 15 ist, und
dass die Verarbeitungseinheit (14) die optische Ausgabeeinheit (15) so steuert, dass graphische Darstellungen der ersten geometrischen Grundform und der zweiten geometrischen Grundform an Positionen auf der optischen Ausgabeeinheit (15) erzeugt werden, die basierend auf den Objektpositionsdaten und der Relativposition der ersten geometrischen Grundform und der zweiten geometrischen Grundform bestimmt werden.

21. Navigationssystem nach Anspruch 19 oder 20,
**dadurch gekennzeichnet, dass** die Speichereinheit (11) eine Speichereinheit nach Anspruch 16 ist, und
dass die Verarbeitungseinheit (14) die optische Ausgabeeinheit (15) so steuert, dass die durch die Typdefinitionsdaten definierte graphische Darstellung der wenigstens einen geometrischen Grundform basierend auf dem Modifikationsparameter (35) modifiziert wird.

22. Navigationssystem nach einem der Ansprüche 18-21,
**dadurch gekennzeichnet, dass** die Speichereinheit (11) eine Speichereinheit nach Anspruch 17 ist, und
dass die Verarbeitungseinheit (14) die optische Ausgabeeinheit (15) so steuert, dass eine graphische Darstellung der wenigstens einen geometrischen Grundform erzeugt wird, und dass die wenigstens eine Oberfläche der wenigstens einen geometrischen Grundform mit der Oberflächentextur gefüllt wird.

23. Navigationssystem nach einem der Ansprüche 18-22,
**dadurch gekennzeichnet, dass** die Objektdaten (31; 45) des anzuzeigenden Objekts weiterhin eine alphanumerische Zeichenfolge (36; 48) umfassen, und
dass die Verarbeitungseinheit (14) die optische Ausgabeeinheit (15) so steuert, dass die alphanumerische Zeichenfolge (36; 48) in die graphische Darstellung der wenigstens einen geometrischen Grundform eingefügt wird.

24. Navigationssystem nach Anspruch 23,
**dadurch gekennzeichnet, dass** das anzuzeigende Objekt ein Verkehrszeichen ist, und dass die alphanumerische Zeichenfolge (36; 48) auf dem Verkehrszeichen anzuzeigenden Text repräsentiert.

25. Navigationssystem nach Anspruch 23 oder 24,
**gekennzeichnet durch** eine Sprachausgabeeinheit (16), wobei die alphanumerische Zeichenfolge (36; 48) weiterhin über die Sprachausgabeeinheit (16) ausgegeben wird.

26. Navigationssystem nach Anspruch 25,
**gekennzeichnet durch** Positionsbestimmungsmittel (17) zum Bestimmen einer momentanen Fahrzeugposition, wobei die alphanumerische Zeichenfolge (36; 48) über die Sprachausgabeeinheit (16) ausgegeben wird, wenn sich die momentane Fahrzeugposition der Objektposition des anzuzeigenden Objekts nähert.

27. Navigationssystem nach einem der Ansprüche 18-26,
**dadurch gekennzeichnet, dass** das Navigationssystem das Verfahren nach einem der Ansprüche 1-13 ausführt.

## Revendications

1. Procédé d'affichage d'un objet sur une carte électronique dans un système de navigation, comprenant les étapes consistant à :
- prévoir un module de stockage (11) comprenant une première section de stockage (12) et une deuxième section de stockage (13),
dans lequel la première section de stockage (12) contient des données de définition de type (21, 25) pour une pluralité de types d'objets, les données de définition de type (21, 25) définissant une représentation graphique d'un type d'objet en termes d'au moins une forme géométrique de base, et dans lequel la deuxième section de stockage (13) contient des données d'objet (31, 37 ; 41, 45) pour une pluralité d'objets, les données d'objet (31, 37 ; 41, 45) pour un objet comprenant des données de type d'objet qui spécifient un type d'objet de l'objet et des données de position d'objet qui spécifient une position d'objet de l'objet ;
- retrouver des données d'objet (31, 37 ; 41, 45) comprenant des données de type d'objet et des données de position d'objet d'un objet à afficher, à partir de ladite deuxième section de stockage (13) ;
- retrouver des données de définition de type (21, 25) dudit objet à afficher à partir de ladite première section de stockage (12), sur la base desdites données de type d'objet dudit objet à afficher ; et
- générer une représentation graphique dudit objet à afficher en générant une représentation graphique de la au moins une forme géométrique de base définie par lesdites données de définition de type (21, 25) au niveau d'une position sur ladite carte électronique qui est déterminée sur la base desdites données de position d'objet.

2. Procédé selon la revendication 1,
**caractérisé en ce que :**
lesdites données de définition de type (21) dudit objet à afficher définissent une représentation graphique de l'objet type en termes d'une première forme géométrique de base et d'une deuxième forme géométrique de base, dans lequel ladite étape de génération d'une représentation graphique comprend l'étape consistant à générer une représentation graphique de ladite première forme géométrique de base et à générer une représentation graphique de ladite deuxième forme géométrique de base.

3. Procédé selon la revendication 2,
**caractérisé en ce que :**
lesdites données de définition de type (21) comprennent par ailleurs des données de position relative qui spécifient une position relative de ladite première forme géométrique de base et de ladite deuxième forme géométrique de base, et ladite représentation graphique de ladite première forme géométrique de base et ladite représentation graphique de ladite deuxième forme géométrique de base sont générées à des positions déterminées sur la base desdites données de position d'objet et desdites données de position relative.

4. Procédé selon l'une quelconque des revendications précédentes,
**caractérisé en ce que :**
lesdites données d'objet (31, 37 ; 41, 45) dudit objet à afficher comprennent par ailleurs au moins un paramètre de modification (35) pour modifier un type d'objet, dans lequel ladite représentation graphique de ladite au moins une forme géométrique de base spécifiée par lesdites données de définition de type (21, 25) est générée sur la base dudit au moins un paramètre de modification (35).

5. Procédé selon la revendication 4,
**caractérisé en ce que :**
ledit au moins un paramètre de modification (35) est sélectionné dans un groupe comprenant une dimension, une orientation, une largeur de ligne, une couleur de ligne, et une texture de surface de ladite au moins une forme géométrique de base.

6. Procédé selon l'une quelconque des revendications précédentes,
**caractérisé en ce que :**
lesdites données de définition de type (21, 25) définissent une représentation graphique dudit type d'objet en termes de ladite au moins une forme géométrique de base et d'une texture de surface pour au moins une surface de ladite au moins une forme géométrique de base, le procédé comprenant l'étape consistant à remplir ladite au moins une surface de ladite au moins une forme géométrique de base avec ladite texture de surface.

7. Procédé selon la revendication 6,
**caractérisé en ce que :**
ladite au moins une forme géométrique de base est une forme cuboïde, et lesdites données de définition de type définissent une texture de surface pour des surfaces latérales de ladite forme cuboïde.

8. Procédé selon l'une quelconque des revendications précédentes,
**caractérisé en ce que :**
lesdites données d'objet (31 ; 45) dudit objet à afficher comprennent par ailleurs au moins une chaîne alphanumérique (36 ; 48), et le procédé comprend l'étape consistant à insérer ladite chaîne alphanumérique (36 ; 48) à l'intérieur de ladite représentation graphique de ladite au moins une forme géométrique de base.

9. Procédé selon la revendication 8,
**caractérisé en ce que :**
ledit objet à afficher est un panneau de signalisation routière, et ladite chaîne alphanumérique (36 ; 48) représente du texte à afficher sur ledit panneau de signalisation routière.

10. Procédé selon la revendication 8 ou la revendication 9,
**caractérisé par** l'étape consistant à :
délivrer en sortie ladite chaîne alphanumérique (36 ; 48) par le biais d'un module de sortie vocale.

11. Procédé selon la revendication 10,
**caractérisé par** l'étape consistant à :
déterminer une position actuelle du véhicule,
dans lequel ladite chaîne alphanumérique (36 ; 48) est délivrée en sortie par le biais dudit module de sortie vocale quand ladite position actuelle du véhicule se rapproche de la position d'objet dudit objet à afficher.

12. Procédé selon l'une quelconque des revendications précédentes,
**caractérisé en ce que :**
ladite forme géométrique de base est sélectionnée dans un groupe comprenant une ligne, un triangle, un rectangle, un octogone, et une ellipse.

13. Procédé selon l'une quelconque des revendications précédentes,
**caractérisé en ce que :**
ladite forme géométrique de base est sélectionnée dans un groupe comprenant une forme cuboïde, une forme sphérique, une forme pyramidale, une forme cylindrique et une forme conique.

14. Module de stockage contenant une pluralité d'objets à afficher sur une carte électronique dans un système de navigation, le module de stockage comprenant :
une première section de stockage (12) qui contient des données de définition de type (21, 25) pour une pluralité de types d'objets, les données de définition de type (21, 25) définissant une représentation graphique d'un type d'objet en termes d'au moins une forme géométrique de base, et
une deuxième section de stockage (13) qui contient des données d'objet (31, 37 ; 41, 45) pour une pluralité d'objets, les données d'objet (31, 37 ; 41, 45) pour un objet comprenant des données de type d'objet qui spécifient un type d'objet de l'objet et des données de position d'objet qui spécifient une position d'objet de l'objet.

15. Module de stockage selon la revendication 14,
**caractérisé en ce que :**
les données de définition de type (21) définissent une représentation graphique d'un type d'objet en termes d'une première forme géométrique de base, d'une deuxième forme géométrique de base, et d'une position relative desdites première et deuxième formes géométriques de base.

16. Module de stockage selon la revendication 14 ou la revendication 15,
**caractérisé en ce que :**
lesdites données d'objet (31, 37 ; 41, 45) pour un objet comprennent par ailleurs au moins un paramètre de modification (35) pour modifier un type d'objet, lequel paramètre de modification est sélectionné dans un groupe comprenant une dimension, une orientation, une largeur de ligne, une couleur de ligne, et une texture de surface de la au moins une forme géométrique de base du type d'objet.

17. Module de stockage selon l'une quelconque des revendications 14 à 16,
**caractérisé en ce que :**
lesdites données de définition de type définissent une représentation graphique dudit type d'objet en termes de ladite au moins une forme géométrique de base et d'une texture de surface pour au moins une surface de ladite au moins une forme géométrique de base

18. Système de navigation, comprenant :
un module de sortie optique (15),
un module de traitement (14), et
le module de stockage (11) selon l'une quelconque des revendications 14 à 17,
dans lequel ledit module de traitement (14) est couplé audit module de stockage (11) pour retrouver des données d'objet (31, 37 ; 41, 45) comprenant des données de type d'objet et des données de position d'objet d'un objet à afficher, à partir de ladite deuxième section de stockage (13), et des données de définition de type (21, 25) dudit objet à afficher à partir de ladite première section de stockage (12), sur la base desdites données de type d'objet de l'objet à afficher,
dans lequel ledit module de traitement (14) commande ledit module de sortie optique (15) de telle sorte qu'une représentation graphique de ladite au moins une forme géométrique de base définie par lesdites données de définition de type (21, 25) soit générée au niveau d'une position sur ladite carte électronique qui est déterminée sur la base desdites données de position d'objet.

19. Système de navigation selon la revendication 18, **caractérisé en ce que :**
pour chaque type d'objet, ladite au moins une forme géométrique de base des données de définition de type est sélectionnée à partir d'un ensemble de formes géométriques de base, et
ledit module de traitement (14) est adapté pour commander ledit module de sortie optique (15) de telle sorte qu'une représentation graphique de chaque forme géométrique de base dudit ensemble de formes géométriques de base puisse être générée sur ledit module de sortie optique.

20. Système de navigation selon la revendication 19,
**caractérisé en ce que :**
ledit module de stockage (11) est un module de stockage selon la revendication 15, et ledit module de traitement (14) commande ledit module de sortie optique (15) de telle sorte qu'une représentation graphique de ladite première forme géométrique de base et de ladite deuxième forme géométrique de base soient générées à des positions sur ledit module de sortie optique (15) qui sont déterminées sur la base desdites données de position d'objet et de ladite position relative desdites première et deuxième formes géométriques de base.

21. Système de navigation selon la revendication 19 ou la revendication 20,
**caractérisé en ce que :**
ledit module de stockage (11) est un module de stockage selon la revendication 16, et ledit module de traitement (14) commande ledit module de sortie optique (15) de telle sorte que ladite représentation graphique de ladite au moins une forme géométrique de base définie par lesdites données de définition de type soit modifiée sur la base dudit paramètre de modification (35).

22. Système de navigation selon l'une quelconque des revendications 18 à 21, **caractérisé en ce que :**
ledit module de stockage (11) est un module de stockage selon la revendication 17, et ledit module de traitement (14) commande ledit module de sortie optique (15) de telle sorte qu'une représentation graphique de ladite au moins une forme géométrique de base soit générée et que ladite au moins une surface de ladite au moins une forme géométrique de base soit remplie avec ladite texture de surface.

23. Système de navigation selon l'une quelconque des revendications 18 à 22, **caractérisé en ce que :**
lesdites données d'objet (31 ; 45) dudit objet à afficher comprennent par ailleurs une chaîne alphanumérique (36 ; 48), et
ledit module de traitement (14) commande ledit module de sortie optique (15) de telle sorte que ladite chaîne alphanumérique (36 ; 48) soit insérée à l'intérieur de ladite représentation graphique de ladite au moins une forme géométrique de base.

24. Système de navigation selon la revendication 23,
**caractérisé en ce que :**
ledit objet à afficher est un panneau de signalisation routière, et ladite chaîne alphanumérique (36 ; 48) représente du texte à afficher sur ledit panneau de signalisation routière.

25. Système de navigation selon la revendication 23 ou la revendication 24,
**caractérisé par** :
un module de sortie vocale (16), dans lequel ladite chaîne alphanumérique (36 ; 48) est délivrée par ailleurs en sortie par le biais dudit module de sortie vocale (16).

26. Système de navigation selon la revendication 25,
**caractérisé par** :
des moyens de détermination de position (17) pour déterminer une position actuelle du véhicule, dans lequel ladite chaîne alphanumérique (36 ; 48) est délivrée en sortie par le biais dudit module de sortie vocale (16) quand ladite position actuelle du véhicule se rapproche de la position d'objet dudit objet à afficher.

27. Système de navigation selon l'une quelconque des revendications 18 à 26,
**caractérisé en ce que :**
ledit système de navigation met en oeuvre le procédé selon l'une quelconque des revendications 1 à 13.
